## Europäisches Patentamt
## European Patent Office
## Office européen des brevets

(19)

(11) Publication number: **0 220 809**
**A2**

(12)
# EUROPEAN PATENT APPLICATION

(21) Application number: **86306440.8**

(22) Date of filing: **20.08.86**

(51) Int. Cl.⁴: **C 08 L 83/06**, C 09 K 3/10, C 08 L 23/22

(30) Priority: **22.10.85 GB 8526039**

(43) Date of publication of application: **06.05.87**
**Bulletin 87/19**

(84) Designated Contracting States: **AT BE CH DE FR GB IT LI NL SE**

(71) Applicant: **Dow Corning Limited, Inveresk House 1 Aldwych, London WC2R 0HF (GB)**
Applicant: **DOW CORNING S.A., Parc Industriel, B-6198 Seneffe (BE)**

(72) Inventor: **Joseph, Edward Alexander, Blucher Strasse 22, D-6200 Wiesbaden (DE)**
Inventor: **Trego, Brian Robert, 17 Robert Schultenlaan, B-1981 Vossem (BE)**

(74) Representative: **Walbeoff, William John, Dow Corning Limited Cardiff Road Barry, South Glamorgan CF6 7YL Wales (GB)**

(54) **Process for forming a seal.**

(57) A process for forming a seal between two surfaces, one of which is glass, comprises depositing and allowing to cure a flowable elastomer-forming composition comprising a polydiorganosiloxane having silicon-bonded hydroxyl groups, a silicon-compound having silicon-bonded alkoxy or alkoxy-alkoxy groups, a catalyst and from 5 to 65 percent by weight based on the weight of the polydiorganosilocane of a polybutylene. Seals formed by this process have a lower water vapour permeability. The process can be used e.g. in the fabrication of multiple glazed windows.

- 1 -

## PROCESS FOR FORMING A SEAL

This invention relates to a process for forming a seal between two or more surfaces. It is particularly concerned with a method of sealing a double glazed article or structure.

The use of silicone elastomer-forming compositions for sealing joints in building structures is now a well-known and widely employed practice. In general the properties of silicone sealants, for example modulus and stability against weathering, render them well suited for use in applications such as the sealing of joints formed between adjacent masonry surfaces. It is known to use a flowable elastomer forming composition comprising a polydiorganosiloxane having terminal silicon-bonded hydroxyl groups, a silicon compound having silicon-bonded alkoxy or alkoxyalkoxy groups and a catalyst, for forming a seal between surfaces of which at least one is glass. Certain related applications however would benefit from a modification of one or more of the properties of the sealant. For example, in the fabrication of glazed structures both on and off the building site there is a need for a sealant having in the cured state a reduced permeability to water vapour. This applies particularly in the fabrication of double glazed units where a silicone sealant may be employed as the, or as part of the, peripheral sealing system.

We have now found that elastomer-forming compositions which comprise a curable organopolysiloxane composition and a polybutene have a reduced permeability to water vapour in the cured state and are particularly adapted for use in the fabrication of glazed structures where this property may be advantageous.

- 2 -

It has been disclosed in G.B. Patent 1 490 240 that the silicone oil in silicone sealing compositions, especially those crosslinked with an acetoxysilane, can be replaced by a polybutylene having a molecular weight below 600. Such modified compositions are stated to have increased stability during storage. In G.B. Patent 1 581 727 there is described and claimed a marine structure which is at least partly coated with one or more layers characterised in that the outermost layer comprises a vulcanised silicone rubber together with a metal-free and silicon-free organic compound, which may be polyisobutene having a molecular weight from 300 - 500. The coated marine structures are stated to have anti-fouling and drag-improving properties.

G.B. Patent 1 122 073 discloses anti-adhesive (release) agents that have a controlled release capability and which comprise an organopolysiloxane which is curable to an elastomer and a polymeric liquid consisting essentially of isobutylene units and having a molecular weight of at least 800.

According to the present invention there is provided a process for forming a seal between two surfaces, at least one of the surfaces being of glass, which comprises depositing between said surfaces a flowable elastomer-forming composition and thereafter allowing the composition to cure to an elastomer, said composition comprising (A) a polydiorganosiloxane having terminal silicon-bonded hydroxyl groups and wherein at least 60 percent of the total organic substituents are methyl groups, (B) a silicon-compound having in the molecule at least 3 silicon-bonded groups selected from alkoxy and alkoxyalkoxy groups having less than 6 carbon atoms, (C) a metal or organometal salt of a carboxylic acid characterised in that said composition also

- 3 -

comprises (D) from 5 to 65 percent by weight, based on the weight of (A) of a polybutylene.

In the polydiorganosiloxanes (A) the organic substituents can be lower aliphatic hydrocarbon groups e.g. methyl, ethyl, propyl or vinyl, phenyl or fluorinated hydrocarbon groups e.g. 3.3.3-trifluoropropyl. At least 60 percent of the total silicon-bonded substituents are methyl with any remaining groups preferably being selected from phenyl and vinyl; the most preferred polydiorganosiloxanes being the polydimethylsiloxanes. The viscosity of the polydiorganosiloxane is not critical and will depend upon various factors including the physical consistency and other properties desired in the composition. Generally polydiorganosiloxanes having viscosity within the range from about 500 to about 100,000 mPa.s at 25°C can be employed, the preferred polydiorganosiloxanes being those having a viscosity in the range from 1000 to 75000 mPa.s at 25°C. Polydiorganosiloxanes (A) are well known substances. They are widely employed in the manufacture of room temperature vulcanising silicone elastomers and may be represented by the general formula

$$HO-SiR''_2(OSiR''_2)_xOH$$

wherein each R'' represents an organic substituent e.g. methyl, and $\underline{x}$ is an integer, preferably having an average value of from about 300 to about 1500.

As component (B) there may be employed any silicon compound, or mixtures thereof, having in the molecule at least three silicon-bonded alkoxy or alkoxyalkoxy groups. The silicon compound may be a silane or a siloxane. Illustrative of such silicon compounds are alkyl orthosilicates e.g. ethyl orthosilicate and propyl orthosilicate, alkyl polysilicates e.g. ethyl polysilicate and n-propyl polysilicate, monoorganotrialkoxysilanes e.g. methyl trimethoxysilane, ethyl trimethoxysilane, methyl tri n-propoxysilane,

- 4 -

butyl triethoxysilane and phenyl trimethoxysilane. Other silicon compounds which can be employed include $Si(OCH_2CH_2OCH_3)_4$ and methylpolysiloxanes containing silicon-bonded alkoxy groups e.g. methoxy or ethoxy groups. In general the preferred silicon compounds (B) are silanes having 3 or 4 alkoxy groups attached to the silicon atom or the partial hydrolysis and condensation products of such silanes. The silicon compound (B) is normally employed in a proportion of from about 1 to about 15 parts by weight per 100 parts by weight of the silanol-terminated polydiorganosiloxane (A).

Component (C) of the compositions of this invention is a curing catalyst and comprises a metal or organometal salt of a carboxylic acid. The metal may be e.g. zinc, cobalt or lead but is preferably tin. Examples of salts (C) are zinc naphthenate, lead octoate, stannous octoate, dibutyltin dilaurate, dibutyltin dioctoate and dibutyltin diversatate. The curing catalyst (C) is generally employed in a proportion of from 0.1 to 10 percent by weight based on the weight of (A).

Compositions comprising (A), (B) and (C) are well known in the organosilicon art and include commercially available materials. Compositions of this type and processes for their production are described in, for example, British Patents 841 825, 844 128 and 938 399.

The polybutylene component (D) can be any polymer consisting solely or predominantly of butylene units, for example polyisobutylene. If desired the polybutylene may contain a minor molar percentage of copolymerised diene e.g. isoprene units. For maximum weathering capability in the sealant, however, it is desirable that such diene content be less than about 2 mol percent and preferably substantially zero. The molecular weight of the polybutylene is not critical and may vary between about 300 to more than 100,000. The proportion of polybutylene employed may range from 5 to 65 percent by weight based on the weight of the polydiorganosiloxane (A). However, for optimum performance of the sealant composition the preferred proportion of polybutylene is from 15 to 50 percent by weight based on (A).

The compositions employed in the process of this invention may be prepared by simply mixing components (A) to (D) on suitable mixing equipment, for example a Z-blade mixer or two-roll mill. However, when components (A), (B) and (C) are mixed the resulting composition cures to an elastomer. Compositions of this type are therefore usually stored and transported prior to use as a two-package product, wherein the catalyst (C) is packaged separately from the polydiorganosiloxane (A). The crosslinking component (B) may be present as a mixture with (A) or with (C) or with both. When required for use the contents of the packages are mixed in the appropriate proportions and cure of the resulting mixture to an elastomer commences. Component (D) of the compositions employed according to this invention may be incorporated into either of the two packages or may be packaged separately for incorporation into the composition just prior to use.

In addition to components (A) to (D) as defined hereinabove the compositions employed herein may contain any of the other ingredients normally present in silicone elastomer-forming compositions. In particular they may contain one or more fillers, for example finely-divided silicas, such as fume silicas, silica aerogels and precipitated silicas, diatomaceous earths, crushed quartz, zinc oxide, titanium dioxide, calcium carbonate, iron oxide and carbon black. The fillers may be untreated or may have been treated with e.g. organosilicon compounds e.g. silazanes, silanols or siloxanols or with organic compounds e.g. calcium stearate. Other ingredients which may also be present include pigments, adhesion promoters e.g. aminoalkyl silanes and epoxyalkyl silanes, heat stability additives and polysiloxanes e.g. polydimethylsiloxanes having triorganosilyl groups at one or both ends of the molecule.

The process of this invention comprises depositing a flowable composition comprising components (A) to (D) between and in contact with two surfaces, one of which is glass, and thereafter allowing the composition to cure to an elastomer. Depending on the particular formulation employed cure of the composition will take place in a time which may range from several minutes to many hours. As a matter of process convenience and economics for most applications the preferred formulations are those which exhibit at least surface cure in a period of from about 20 minutes to about 5 hours. The process may be employed in various applications where it is necessary or desirable to form a seal of a silicone sealant having reduced permeability to the transmission of water vapour. In particular the process can be employed in the fabrication of multiple-glazed window units or other structures comprising two or more parallel glass sheets defining an air space or vacuum which is isolated from the surrounding environment by a flexible sealing arrangement.

The following examples, in which the parts are expressed by weight, illustrate the invention.

Example 1

A two-part elastomer-forming composition was prepared as follows:

Part A was prepared by mixing

| | | |
|---|---|---|
| $\alpha,\omega$, dihydroxy polydimethylsiloxane (12,500 mPa.s at 25°C) | 100 | parts |
| calcium carbonate | 100 | parts |

Part B was prepared by mixing

| | | |
|---|---|---|
| $Si(OCH_2CH_2CH_3)_4$ | 25 | parts |
| silane adhesion promoter | 12.5 | parts |
| dibutyltin dilaurate | 0.5 | part |
| trimethylsilyl end-stopped polydimethyl-siloxane (12,500 mPa.s at 25°C) | 55 | parts |

Part A was divided into 5 portions and into each of four portions were mixed respectively 10.7, 22.56, 35.82 and 50.75 parts by weight per 100 parts by weight of dihydroxy polydimethylsiloxane, of a polyisobutylene having a molecular weight of 40,000 and available commercially as Vistanex LMMS. Mixing was carried out in a Drais mixer for a time sufficient to obtain homogeneity, typically for about one hour at 60°C. No polyisobutylene was added to the fifth portion of Part A which was retained as a control.

Following the mixing operation the compositions were allowed to cool to normal room temperature and into each of the 5 portions was mixed Part B in a proportion of 1 part by weight of Part B per 10 parts by weight of the mixture of polydimethylsiloxane and calcium carbonate in each portion. Each portion was poured into a shallow tray and allowed to cure for 24 hours at 25°C to an elastic membrane having a thickness of 1.9 mm.

The rate of transmission of water vapour through each membrane was measured according to ASTM E96, procedure E.

- 8 -

Briefly the said test involves introducing a weighed amount of dry silica gel into an impermeable cup and immediately sealing the open end of the cup with the preformed elastomeric membrane. The cup is then placed in an atmosphere at 38°C and 90% relative humidity for one week. The increase in weight of the silica gel is then measured and employed to calculate the water vapour transmission rate in $g.m^{-2}$ per 24 hours.

The results obtained were as follows:

| | Polyisobutylene Addition | | | | |
|---|---|---|---|---|---|
| | 0 | 10.7 | 22.56 | 35.82 | 50.75 |
| Transmission rate $g.m^{-2}/24$ hr. | 39.7 | 33.5 | 31 | 28.7 | 23.4 |

Example 2

A two-part elastomer-forming composition was prepared as in Example 1. Part A was divided into 4 portions and into each of three portions were mixed respectively 22.56, 35.82 and 50.75 parts by weight per 100 parts by weight of dihydroxy polydimethylsiloxane, of a polyisobutylene having a molecular weight of about 50,000 and available commercially as Vistanex LMMH. Mixing was carried out as in Example 1. The fourth portion of Part A was not mixed with any polyisobutylene and was retained as a control.

All portions were further treated as in Example 1 and the vapour transmission rate was measured as in Example 1. The results obtained were as follows:

| | Polyisobutylene Addition | | | |
|---|---|---|---|---|
| | 0 | 22.56 | 35.82 | 50.75 |
| Transmission rate $g.m^{-2}/24$ hr | 39.7 | 29.0 | 26.15 | 23.6 |

Example 3

A two-part elastomer-forming composition was prepared as in Example 1. Part A was divided into 5 portions and into each of four portions were mixed respectively 15.4, 30.8, 46.3 and 61.7 parts by weight per 100 parts by weight of dihydroxy polydimethylsiloxane, of a polyisobutylene having a molecular weight of about 40,000 and available commercially as Vistanex LMMS. Mixing was carried out as in Example 1. The fifth portion of Part A was not mixed with any polyisobutylene and was retained as a control.

The portions were deposited into French glass H-pieces, made according to the French SNJF specification, and allowed to cure. The glass pieces with the cured composition were them immersed in water at a temperature which exceeded 50°C for a period of 50 hours. When the test pieces were cooled down they were tested for breaking force and the type of break observed. "A" denotes that the break is caused by adhesive failure between the glass and the elastomer, while "C" denotes that the break is cohesive indicating a good adhesion between the glass and the elastomer.

The results are given below:

| | Polyisobutylene Addition | | | | |
|---|---|---|---|---|---|
| | 0 | 15.4 | 30.8 | 46.3 | 61.7 |
| Breaking Force (kg) | 9 | 6.6 | 7.0 | 8.1 | 11.2 |
| Failure Type | 100%A | - | - | 75%C | 80%C |

- 10 -

CLAIMS

1.    A process for forming a seal between two surfaces, at least one of the surfaces being of glass, which comprises depositing between said surfaces a flowable elastomer-forming composition and thereafter allowing the composition to cure to an elastomer, said composition comprising (A) a polydiorganosiloxane having terminal silicon-bonded hydroxyl groups and wherein at least 60 percent of the total organic substituents are methyl groups, (B) a silicon-compound having in the molecule at least 3 silicon-bonded groups selected from alkoxy and alkoxyalkoxy groups having less than 6 carbon atoms, (C) a metal or organometal salt of a carboxylic acid, characterised in that said composition also comprises (D) from 5 to 65 percent by weight, based on the weight of (A) of a polybutylene.

2.    A process according to Claim 1 further characterised in that polydiorganosiloxane (A) is a polydimethylsiloxane having terminal silicon-bonded hydroxyl groups.

3.    A process according to either one of Claims 1 or 2 further characterised in that polydiorganosiloxane (A) has a viscosity at 25°C in the range from 1000 to 75000 mPa.s.

4.    A process according to any one of the preceding claims further characterised in that silicon-compound (B) is a silane having 3 or 4 alkoxy groups attached to the silicon atom, or the partial hydrolysis and condensation product of such silanes.

5.    A process according to any one of the preceding claims further characterised in that the polybutylene component (D) has substantially no copolymerised diene present.

- 11 -

6.  A process according to any one of the preceding claims further characterised in that the composition comprises 100 parts by weight of polydiorganosiloxane (A), from 1 to 15 parts by weight of silicon-compound (B), from 0.1 to 10 parts by weight of component (C) and from 5 to 65 parts by weight of polybutylene component (D).

7.  A process according to Claim 6 further characterised in that the composition comprises from 15 to 50 parts by weight of polybutylene component (D).

8.  A process according to any one of the preceding claims further characterised in that the composition also comprises a filler.

9.  A process according to any one of the preceding claims further characterised in that the seal is formed between two glass surfaces.

10.  A process according to any one of the preceding claims further characterised in that the process is employed in the fabrication of multiple glazed window units.